# EUROPEAN PATENT SPECIFICATION

(11) **EP 1 447 669 B1**
(45) Date of publication and mention of the grant of the patent: **18.11.2009**
(21) Application number: 04002600.7
(22) Date of filing: 05.02.2004
(51) Int. Cl.: G01N 35/10, B01L 3/02

(54) **Chemical analysis apparatus**
Vorrichtung zur chemischen Analyse
Appareillage d'analyse chimique

(30) Priority: 05.02.2003 JP 2003027752
(43) Date of publication of application: 18.08.2004
(73) Proprietor: Hitachi High-Technologies Corporation, Tokyo (JP)
(72) Inventor: Yamakawa, Hironobu, Tokyo 100-8220 (JP); Enoki, Hideo, Tokyo 100-8220 (JP); Yamazaki, Isao, Hitachinaka-shi Ibaraki (JP)
(74) Representative: Beetz & Partner

(56) References cited:
- DE-A- 4 209 885
- US-A- 4 563 175
- US-A- 5 723 795
- PATENT ABSTRACTS OF JAPAN vol. 2000, no. 07, 29 September 2000 (2000-09-29) & JP 2000 121649 A (FURUNO ELECTRIC CO LTD; TOYOBO CO LTD), 28 April 2000 (2000-04-28)

## Description

### FIELD OF THE INVENTION

The present invention relates to a chemical analysis apparatus to be used preferably for analyzing small amounts of material contained in or taken from a living body.

### DESCRIPTION OF THE PRIOR ART

An apparatus described in JP-A-2000-121649 is an automatic pipetting apparatus for pipetting a predetermined amount of sample while detecting an abnormality in the suction operation; it is characterized in that the automatic pipetting apparatus has nozzle means for sucking and discharging the sample on the basis of a change of the suction pressure, pressure detecting means for detecting the suction pressure, suction pressure curve data calculating means for determining suction pressure curve data showing a suction pressure changing state from the start of the sample suction until the end of the sample suction, on the basis of a pipetting parameter having an effect on the change of suction pressure, and suction abnormality detecting means for detecting a suction abnormality on the basis of the suction pressure detected by the pressure detecting means and the suction pressure curve data.

In the prior art mentioned above, although it is taken into consideration that the pressure is changed with time in the course of discharging and sucking a small amount of sample solution or reagent solution, no consideration is given to the transient state in the course of discharging and sucking, and the problems generated momently in a steady state.

First of all, there is no description about a countermeasure against the problem that a water hammer is generated by a rapid movement of a piston (hereinafter referred to as plunger) within a syringe in the initial operation of a reciprocating motion of the plunger in a transient state at the time of starting the discharge, whereby the accuracy of pipetting is lowered due to a rapid increase and a rapid decrease of the solution measure, or solution drops are scattered due to the rapid increase and the rapid decrease of the solution measure, thereby contaminating the apparatus.

Secondly, there is no description about a countermeasure against the problem that the plunger driven by a pulse motor intermittently moves in a steady state in the course of discharging, whereby the pipetting accuracy is lowered by the pressure and the pulsation of the flow rate generated thereby, or the solution drops are scattered, thereby contaminating the apparatus.

Thirdly, there is no description about a countermeasure against the problem that the water hammer is generated in the same manner as that at the time of starting the discharge and the flow rate is rapidly decreased, due to a rapid stop of the plunger in the transient state in the end of the discharge, whereby the pipetting accuracy is lowered due to solution drops and lack of the pipetting amount, or solution drops are scattered, thereby contaminating the apparatus.

US 5 723 795 discloses a method and an apparatus for fluid handling and dispensing. The apparatus comprises a pressure transducer (22) equipped with a sensor (24), provided in the conduit (16) between the probe arm nozzle (12) and the pump (18). The pressure transducer monitors substantially continuously the pressure within the nozzle, and the operation of the pump is determined based on the monitored pressure.

### BRIEF SUMMARY OF THE INVENTION

Accordingly, it is the object of the present invention to provide a chemical analysis apparatus which can contribute to solving at least one of these problems, can prevent scattering of solution drops and provides a high pipetting accuracy.

The above problem is solved according to the independent claims.

The dependent claims relate to preferred embodiments of the present invention.

In order to solve the problem mentioned above, the present invention is characterized in that the following aspects are provided.
(1) There is provided a chemical analysis apparatus comprising:
   a reagent vessel provided with a reagent solution;
   a sample vessel provided with a sample solution;
   a reaction vessel to which the reagent and the sample are supplied;
   a reagent supplying mechanism for supplying the reagent to the reaction vessel; and
   a sample supplying mechanism for supplying the sample to the reaction vessel,
wherein at least one of the reagent supplying mechanism and the sample supplying mechanism comprises:
a probe portion for sucking and discharging the solution;
a probe arm portion communicated with the probe portion and moving the probe portion to the reagent vessel or the sample vessel and the reaction vessel; and
a pump to which a pipe is connected, the pipe being communicated with the pump and with the probe portion via the probe arm portion, and
wherein flow control means which reduce pressure pulsations are provided in the pipe positioned between the probe arm portion and the pump.

Preferred embodiments of the invention are described in the dependent claims.

In accordance with the aspects shown above, it is possible to provide a chemical analysis apparatus which can solve or contribute to solving at least one of the problems in the prior art.

In particular, for example, the invention provides a chemical analysis apparatus which can make the influence of the water hammer at the time of starting the discharge of the sample and the reagent small, thereby making the pipetting accuracy high and inhibiting scattering of solution drops.

It is also possible according to the invention to provide a chemical analysis apparatus which can make the influence of the pulsation of the pressure and the flow rate in the course of discharging the sample and the reagent small, thereby making the pipetting accuracy high and inhibiting scattering of the solution drops.

It is also possible in accordance with the invention to provide a chemical analysis apparatus which can make the influence of the water hammer at the end of discharging the sample and the reagent small, thereby making the pipetting accuracy high and inhibiting scattering of solution drops.

Other objects, features and advantages of the invention will become apparent from the following description of embodiments of the invention taken in conjunction with the accompanying drawings.

### BRIEF DESCRIPTION OF THE DRAWINGS

Fig. 1 is a schematic view showing an embodiment in accordance with the present invention;
Fig. 2 is a schematic view showing an embodiment in accordance with the present invention;
Fig. 3 is an explanatory illustration showing the case of a comparative embodiment;
Fig. 4 is an explanatory illustration showing the case of a comparative embodiment;
Fig. 5 is an explanatory illustration showing the case of a comparative embodiment and the case of an embodiment of the present invention;
Fig. 6 is a schematic view showing a further embodiment in accordance with the present invention;
Fig. 7 is a schematic view showing another embodiment in accordance with the present invention;
Fig. 8 is a schematic view showing another embodiment in accordance with the present invention;
Fig. 9 is an explanatory illustration showing the case of a comparative embodiment and the case of the present embodiment;
Fig. 10 is an explanatory view showing the case of a comparative embodiment, and
Fig. 11 is a schematic view showing an embodiment in accordance with the present invention.

### DETAILED DESCRIPTION OF THE INVENTION

A description will be given of a first embodiment in accordance with the present invention with reference to the accompanying drawings. In this case, the present invention is not limited to the examples and drawings disclosed in the present specification.

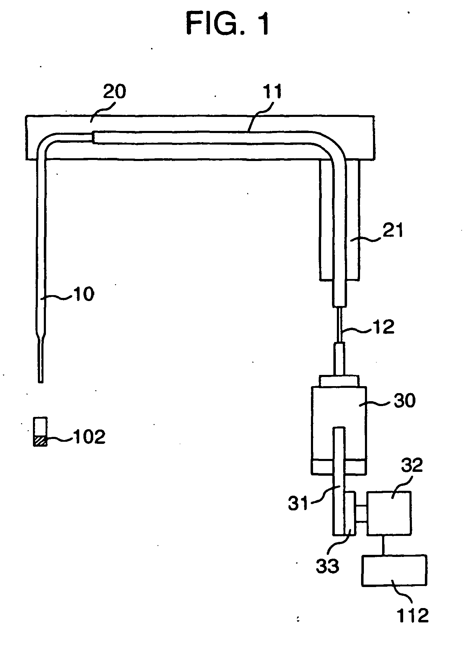

Fig. 1 is a schematic view showing an embodiment in the present chemical analysis apparatus. A probe 10 is fixed to a probe arm 20, and is rotated and vertically moved by an arm rotating rod 21. A pump 30, for example, a syringe pump is piped to the probe 10 via a tube 11. As flow control means, a flow resistance portion 12 constituted by a narrow diameter tube is connected to the connection portion between the tube 11 and the syringe pump 30. A system water such as a pure water or the like is filled as a working fluid in the tube. A plunger 31 is moved by a pulse motor 32 via a transmission mechanism 33 such as a belt, a rack and pinion or the like. The pulse motor 32 is controlled by a controller 112. A reagent and a sample pipetted by the probe 10 are discharged to a measurement vessel 102. In the present embodiment, the probe is structured such that the inner diameter is 0.8 mm, the outer diameter is 1.2 mm, the length is 20 cm, and the material is SUS having a good chemical resistance, however, is not limited to this. The tube may be constituted by a resin tube having a good chemical resistance, and having an inner diameter of 1.5 mm, an outer diameter of 2.3 mm, a length of 2 m; the material may preferably be a polyfluoroethylene (a polytetrafluoroethylene, PTFE). As mentioned above, the flow resistance portion 12 such as the narrow tube or the like having a smaller cross-sectional area than the tube 11 in the probe arm 20 portion is provided in the tube 11 corresponding to the pipe positioned between the probe arm 20 and the syringe pump 30.

As mentioned above, since it is possible to obtain the effect that the energy of a pulsation generated in the course of feeding a solution by the pump gets scattered and lost by the flow control means, here the flow resistance portion, by arranging that flow resistance portion in the way of the tube, the pulsation in the discharge port can be lowered, and a water hammer can be prevented or reduced, and the pipetting accuracy can be improved.

Further, it is preferable that flow control means, here the narrow pipe, are arranged at the upstream side in the piping path from the pump to the leading end of the probe. For example, the following three effects can be obtained by arranging the narrow pipe in the area between the probe arm portion and the pump, whereby it is possible to lower the water hammer and to improve the pipetting accuracy.

As a first effect, it is possible to lower the pulsation generated by the syringe pump mentioned above. Since the syringe pump is driven by a pulse or stepper motor, a pulsation tends to be generated. The probe arm portion generally comprises a resin tube which has a fixed rigidity so as to make the arm be easily driven, and is made of polyfluoroethylene (polytetrafluoroethylene, PTFE), however, in the case that a high pressure is applied, the tube may be deformed, leading to a greater pulsation generated by the syringe pump. Further, in the case that the tube is deformed, a part of the pressure for sucking and discharging the solution from the probe applied by the syringe pump is consumed for deformation. Accordingly, it is preferable that the pulsation generated by the syringe pump is lowered before being input to the resin tube.

As a second effect, it is possible to lower the pulsation influence if pulsation resonance occurs. In case that the frequency of the pulsation of the syringe pump coincides with the resonance frequency which a fluid system of the present pipetting apparatus from the syringe pump to the probe has because of its structure, the amplitude of the pulsation is increased. If the placing portion of the flow resistance portion 12 is at the quarter time distance of the wavelength of the pulsation from the leading end of the probe, it is possible to reduce the magnitude of the amplitude in the discharge port at the leading end of the probe at the time of pulsation. Further, if the placing portion is further closer to the syringe pump, it is possible to inhibit the resonance amplitude of the entire fluid system. The wavelength of the pulsation can be easily calculated on the basis of the entire length of the pipetting diameter of the fluid system.

As a third effect, it is possible to avoid a problem in manufacturing. In the case of connecting the respective elements comprising the probe, the tube and the syringe pump of the present pipetting system so as to prevent a solution from leaking, it is preferable that the number of the connecting portions is reduced. This is because there is the problem that it is necessary to sufficiently secure the sealing property for preventing the solution from leaking, and there is the problem that the solution is left in view of the general structure of the connection portion. Accordingly, it is hard in view of manufacturing that the connection portion is provided in the way of the tube. In the same manner, in the case of placing the connection portion in front of the probe, there is generated a further problem. Because there might be the case that the solution enters into the tube from the probe due to an increase of the suction amount. In other words, in the case that the flow resistance portion is provided in front of the probe, the sucked solution passes through only the connection portion between the probe and the tube conventionally, however, in the case that the flow resistance portion is arranged in front of the probe, the solution passes through in total two connection portions among the probe, the resistance portion and the tube, so that the solution tends to be left.

Further, in the case that the flow resistance portion or flow control means 12 is provided with the narrow pipe, it is preferable that the cross-sectional area of the pipe is equal to or less than 99/100 the cross sectional area of the tube 11 in the probe arm 20, and the length of the pipe is equal to or less than 1/5 the length of the tube 11 in the probe arm 20. Since the fluid passes through such a level of narrow pipe, the flow is changed in the connection portion between the tube 11 of the probe arm portion 20 and the narrow pipe and a resistance is generated, so that it is possible to provide the effect that the energy of a pulsation is scattered and dissipated. In the case that it is necessary to widen the movable range of the tube for convenience of mounting on the apparatus, it is possible to inhibit the tube including the connection portion and the narrow portion from being excessively deformed due to the different diameters, and it is possible to prevent a resonance with the pulsation from being generated, by at least setting the area ratio equal to or less than 4/5 and setting the length ratio equal to or less than 1/10.

Further, when the pipe becomes narrow, the pressure loss is increased, so that there is the risk that the static pressure of the fluid becomes equal to or less than the saturated vapor pressure, and cavitation is generated lowering the pipetting accuracy. Since the static pressure of the fluid is determined in accordance with the flow rate and the shape of the fluid system, the static pressure is different in correspondence to the apparatus, however, it is preferable that the cross-sectional area of the narrow pipe is equal to or more than 1/100 the cross-sectional area of the tube 11, and the length of the narrow pipe is equal to or more than 1/1000 the length of the tube 11. Accordingly, it is possible to prevent the pressure loss from being increased more than unavoidable. In the case that it is necessary to suck and discharge the fluid at a very high pressure in order to increase the pipetting speed for convenience of the apparatus, there is the possibility that the pressure loss is generated further in the portion in which the cross-sectional area is changed, however, if the cross-sectional area ratio is equal to or more than 1/5, and the length ratio is equal to or more than 1/500, it is possible to change the flow of the connection portion, and it is possible to obtain a certain degree of effect which is not sufficient.

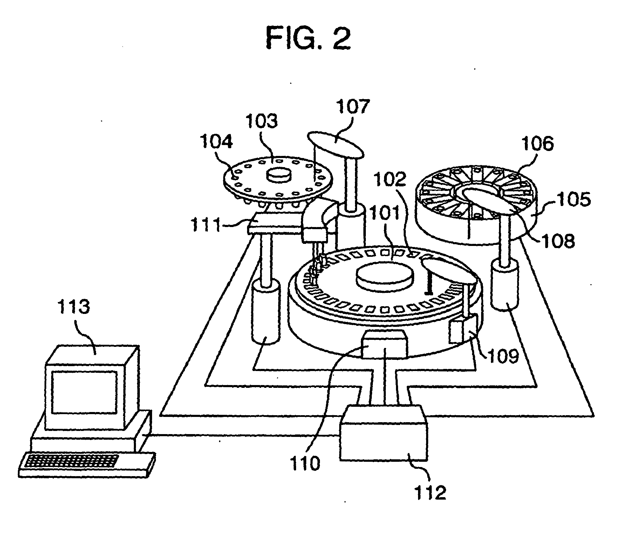

Fig. 2 is a general schematic view showing the structure of a chemical analysis apparatus in accordance with the present embodiment. The present chemical analysis apparatus is provided, for example, with a plurality of reaction vessels 102 each having an upper opening portion, pipetting mechanisms 107 and 108 corresponding to a supplying mechanism for supplying a sample and a reagent from the opening portion, and a photometric mechanism 110 corresponding to measuring means for measuring physical properties of the sample which is under reaction or has ended the reaction. A description will be given of this chemical analysis apparatus.

In particular, the chemical analysis apparatus is constituted by a reaction disc 101 for mainly storing the reaction vessel 102, a constant temperature bath 114 for keeping a constant temperature state of the reaction vessel stored in the reaction disc 101, a sample turntable 103 for receiving a sample vessel 104, a reagent turntable 105 for storing a reagent bottle 106, the sampling pipetting mechanism 107 for pipetting the sample and the reagent to the respective reaction vessels, the reagent pipetting mechanism 108, an agitating mechanism 109 for agitating the pipetted sample and reagent within the reaction vessel, the photometric mechanism 110 for measuring the absorbance in the process of reaction of the mixed materials within the reaction vessel and/or after the reaction, and a cleaning mechanism 111 for cleaning the reaction vessel after the test (the photometry) is finished. Each of the constituting elements is operated in accordance with a program automatically provided by a controller 112 on the basis of information (analysis items and volume to be analyzed) previously set through a console 113 before starting the test.

Regarding the structure mentioned above, a description will be given of an embodiment of the operation of the present chemical analysis apparatus.

The probe arm 20 and the probe arm 21 execute a rotational motion and a vertical motion, whereby the probe 10 is dipped into the sample cup 104 in which the sample is contained and the reagent bottle 106 in which the reagent is contained, and thereafter the plunger 31 is moved downward by the controller 112, and sucks the sample into the probe 10. Successively, the probe arm 20 and the probe arm 21 again execute the rotational motion and the vertical motion so as to move to the above of the reaction vessel 102, and thereafter the plunger 31 is moved upward and discharges the sample and the reagent within the probe into the reaction vessel 102.

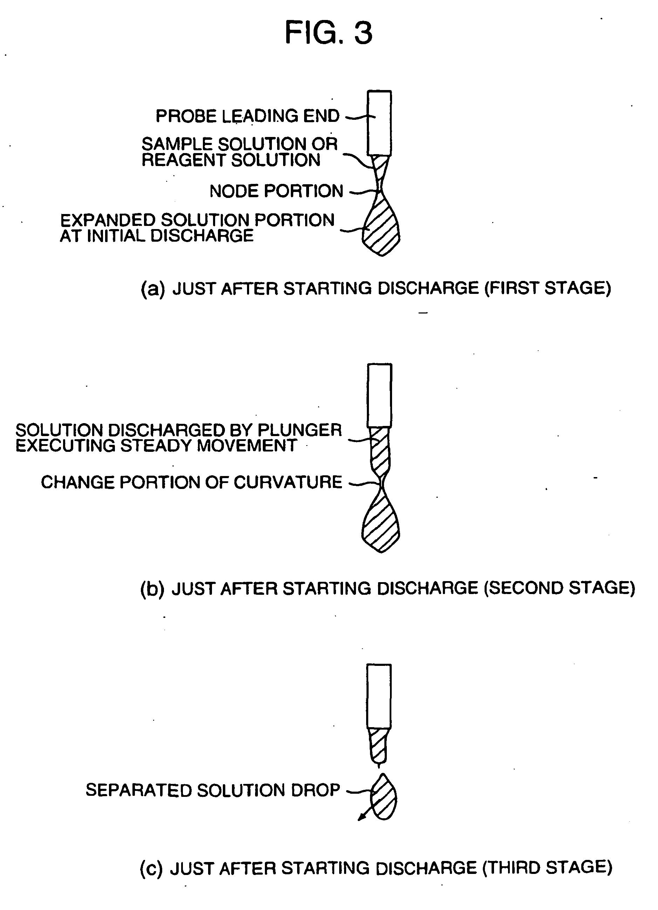

Accordingly, in the discharging mechanism constituted by the probe, the tube and the syringe pump in the chemical analysis apparatus, it is possible to avoid the problem generated in the transient state at the time of starting the discharge. In other words, the plunger rapidly moves in the initial operation for discharging in the plunger, whereby a water hammer is generated. As shown in Fig. 3, as a first stage, there is a case that when a high pressure small amount of solution within the probe is rapidly exposed to the atmosphere by the impact force of the water hammer, the small amount of solution is not discharged due to the strong surface tension in the resting state of the small amount of solution at the leading end of the probe even by being fed at the high pressure, so that the volume of the solution is rapidly increased.

At this time, the capacity of the discharged solution is rapidly increased by the water hammer in the initial value, and it is impossible to faithfully reflect the volume change in accordance with the movement of the plunger. Accordingly, it is possible to inhibit the pipetting accuracy from being lowered, by employing the present embodiment.

As the next stage, since an overshoot of the pressure is generated during the time when the volume of the solution is rapidly increased in the leading end of the probe, the pressure is rapidly lowered as a "returning phenomenon" thereof, and the amount of the solution fed at that time is lowered. Accordingly, the diameter of the discharged solution at the leading end of the plunger becomes narrow like a node, a solution break is generated in some cases, and it is possible to inhibit the broken solution drop from being scattered to the periphery. Further, at this time, since the capacity of the discharged solution is rapidly reduced in the "returning", it is possible to prevent lowering of the pipetting accuracy due to the fact that the volume change caused by the movement of the plunger is not faithfully reflected therein.

Further, in the case that the solution is scattered to other portions out of the measurement vessel, the discharged solution is reduced, so that it is possible to inhibit the pipetting accuracy from being lowered and it is possible to inhibit the broken solution from being scattered to the periphery so as to contaminate the apparatus.

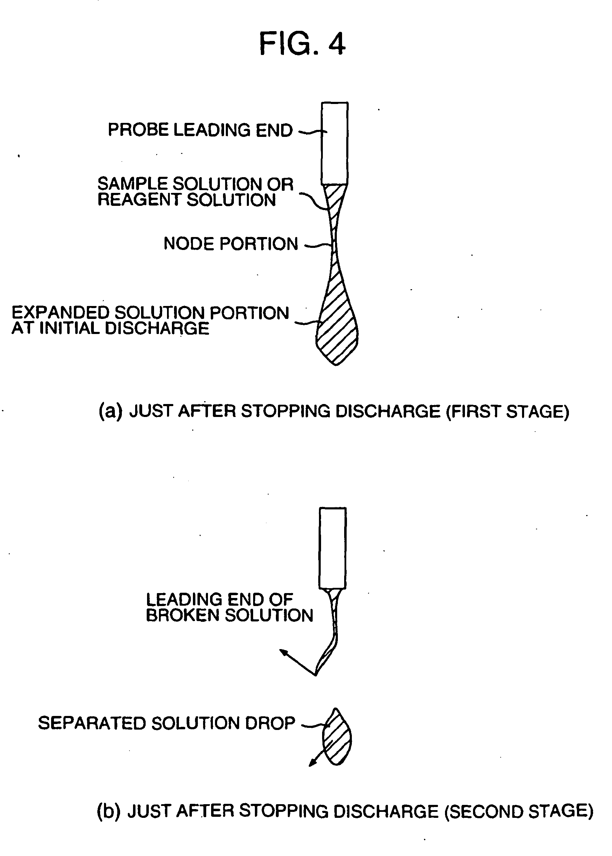

Further, in a discharge mechanism constituted by the probe, the tube and the syringe pump in the chemical analysis apparatus which does not employ the aspect in accordance with the present embodiment, since the plunger suddenly stops in the transient state at the end of the discharge, the pressure is rapidly lowered, so that there is the case that the flow rate is lowered. At this time, since the narrow diameter node portion is generated in the discharged solution as shown in Fig. 4, a solution break is generated, and there is the risk that the broken solution drop is scattered to the periphery. Further, since the solution close to the broken node rapidly loses the coherence, the solution executes an unstable motion, and the solution goes around the leading end of the probe in some cases so as to be attached thereto. Since the probe moves while executing the vertical motion and the rotational motion after being discharged, there is the risk that the solution attached at this time is scattered together with the movement of the probe. Further, there is a case that the solution stays in a state of protruding from the leading end on the basis of the surface tension while the solution does not go around the outer side of the probe, however, in this case, there is the possibility that the protruding solution is scattered together with the movement of the probe. It is possible to structure the analysis apparatus inhibiting the possibility mentioned above, by employing the present embodiment. Further, since the portion in which the solution break is generated depends greatly upon physical properties such as the viscosity, the wettability and the like of the discharged sample or reagent, the portion changed every discharging time, however, the present embodiment can inhibit the risk that the pipetting accuracy is lowered due to the change of the discharging amount.

A problem generated at the time of starting the discharge and finishing the discharge is further increased when intending to make the pipetting speed high. Accordingly, the present embodiment is preferable for designing an analysis apparatus provided with a mechanism of pipetting at a high speed. For example, when discharging at a high speed, the water hammer caused by the rapid stop of the plunger is further enlarged, the possibility that the solution is scattered due to the solution break is higher, and there is the problem that the pipetting accuracy is greatly lowered.

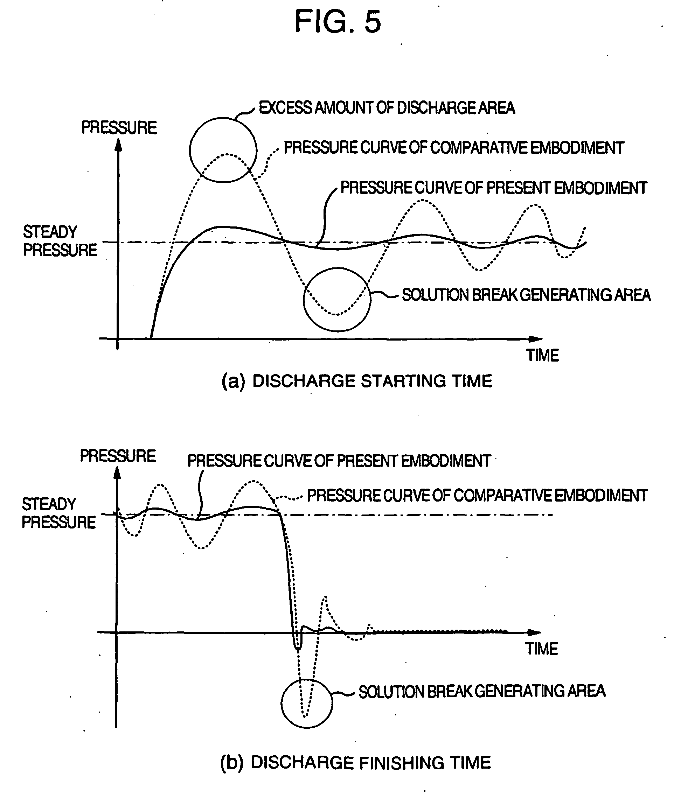

A transient pressure fluctuation at this time is shown by Figs. 5(a) and 5(b). The case in accordance with a comparative embodiment which does not employ the present embodiment is shown by a broken line, and the case using the structure shown by the present embodiment is shown by a solid line. At this time, the pressure shows a water hammer phenomenon such as the overshoot and the "returning" thereof as illustrated, the solution is discharged at an excessive amount as mentioned in the problem to be solved by the invention, and problems such as the solution break or the like are further generated.

In the present embodiment, even in the case that it is intended to reduce the change by using standard products for the probe and the tube, the portion generating the fluid flow resistance can be concentrated to a portion near the syringe pump corresponding to the pressure source. In this case, it is conceivable to employ the method of placing an orifice, however, the aspect of easily inserting the narrow pipe is desirable. In the present embodiment, the narrow pipe having a length of 10 mm and an inner diameter of 1 mm is inserted. Since the inner diameter is within the limit of the cross-sectional area with respect to the other tube diameter 1.5 mm such as the probe arm 20, the wave form of the pressure is as shown by the solid lines in Figs. 5(a) and 5(b), the influence of the water hammer such as the overshoot and the "returning" thereof breaks down, it is possible to inhibit the discharge at an excessive amount, and a solution break is hard to be generated.

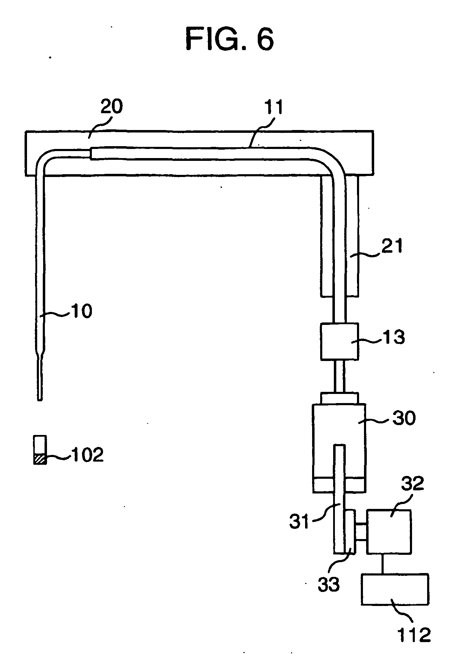

Further, another embodiment is shown in Fig. 6. The embodiment in Fig. 6 can basically have the same structure as that in Fig. 1 mentioned above, however, the embodiment in Fig. 6 is characterized in that an expanded area having a larger cross-sectional area than that of the tube 11 in the probe arm 20 is provided in a pipe positioned between the probe arm 20 and the syringe pump 30, in place of the flow resistance portion 12 mentioned above. A pipe having an inner diameter of about 5 mm and a length of about 10 mm can be connected as a volumetric capacity portion 13 having a fixed capacity and arranged in the connecting portion of the tube to the syringe pump, however, the structure is not limited to this.

In particular, it is advisable that the cross-sectional area of the volumetric capacity portion 13 corresponding to the expanded area is equal to or more than 101/100 times the cross-sectional area of the tube 11 in the probe arm 20 and 1/1000 times the length, and it is preferable that the cross-sectional area is equal to or more than 5/4 times, and the length is equal to or more than 1/500 times. This is because the capacity is the minimum capacity which can absorb the vibration energy contained in the fluid and can be scattered and dissipated. Further, for example, as an upper limit, it is preferable that the cross-sectional area is equal to or less than 10 times and the length is equal to or less than 1/5, and the cross-sectional area is equal to or less than twice and the length is equal to or less than 1/10, for the purpose of preventing the pressure fluctuation from being propagated into the volumetric capacity portion from the syringe pump so as to lower the response of the fluid system. Accordingly, it is possible to save an amount of the pure water consumed in the fluid system. It is desirable that the installation position is at a distance 1/4 times the wavelength of the pulsation from the leading end of the probe, and near the syringe portion.

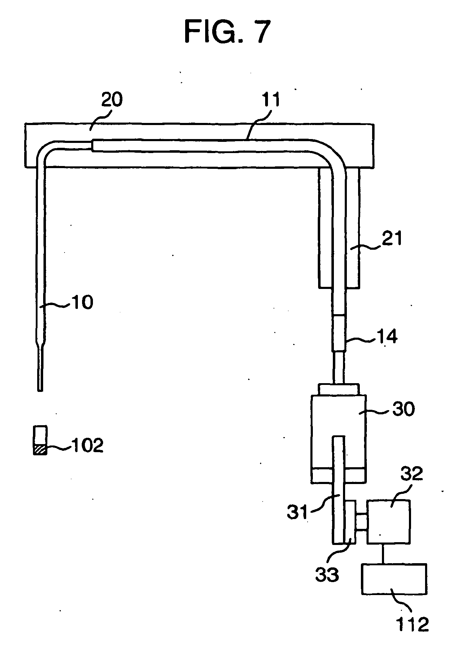

Any other embodiment is shown in Fig. 7. The embodiment in Fig. 7 can basically have the same structure as that in Fig. 1 mentioned above, however, the embodiment in Fig 7 is characterized in that an elastic portion 14 is provided in the pipe positioned between the probe arm 20 and the syringe pump 30, in place of the flow resistance portion 12 and the volumetric capacity portion 13 mentioned above as flow control means. In particular, it is preferable that an elastic area structured by a material having a lower elastic modulus in tension than the probe and having a rigidity in the range of the elastic modulus in tension between 100 and 3000 kgf/cm² (981 N/cm² and 29.4 kN/cm²) is provided in the pipe positioned between the probe arm portion and the pump portion.

As the elastic portion 14, it is desirable to insert an elastic pipe constituted by a resin tube having a rigidity in the range of the elastic modulus in tension between 100 and 3000 kgf/cm² (981 N/cm² and 29.4 kN/cm²). For example, it is preferable to insert a tigon tube having an elastic modulus of tension of 1570 N/cm³ (160 kgf/cm²) and a length of about 50 mm. The tube 11 is a resin tube having a comparatively high elastic modulus of tension of about 343 kN/cm³ (about 3500 kgf/cm²) such as a polyfluoroethylene (polytetrafluoroethylene) tube or the like. The water hammer of the syringe pump and the energy of the pulsation are propagated as it is to the leading end of the probe, and the pipetting solution tends to be discharged at an excess amount and the solution break tends to occur. Accordingly, by inserting the elastic pipe having the elastic modulus in tension equal to or less than 29.4 kN/cm² (3000 kgf/cm²), the elastic pipe is deformed at the time when the pressure is propagated to the inserted elastic pipe, so that it is possible to obtain the effect that the water hammer and the pressure of the pulsation can be consumed by the deformation of the elastic pipe. Further, as a lower limit of the elastic modulus of the elastic pipe, for example, in the case of a resin tube such as a silicone tube or the like having a comparatively low rigidity in which the elastic modulus in tension is about 589 N/cm² (60 kgf/cm²), a great deformation such as a flat shape of the tube is generated in the case that a high pressure is applied at the time of discharging. In the extreme case, the tube collapses, and the fluid can not flow. Accordingly, it is desirable that the elastic modulus in tension is equal to or more than 981 N/cm² (100 kgf/cm²).

In this case, it is preferable that the elastic area includes a position at a distance 1/4 times the pulsation from the leading end of the probe or integral multiple areas.

Since it is possible to obtain the effect that the energy of the pulsation generated in the solution is scattered and lost, it is possible to lower the pulsation in the discharge port, and it is possible to lower the water hammer and improve the pipetting accuracy. As mentioned above, since the influence of the water hammer is reduced at the time of starting the discharge by arranging the fluid resistance portion in the course of the narrow pipe connecting the probe and the syringe pump, in particular, near the connection portion between the syringe pump and the narrow pipe, it is possible to provide a chemical analysis apparatus in which the pipetting accuracy is high and sample and reagent are not scattered:

Further, since the influence of the water hammer is reduced at the time of finishing the discharge by arranging the fixed volumetric capacity portion in the course of the narrow pipe connecting the probe and the syringe pump, in particular, near the connection portion between the syringe pump and the narrow pipe, it is possible to provide a chemical analysis apparatus in which the pipetting accuracy is high and sample and reagent are not scattered.

Further, since the influence of the water hammer is reduced at the time of finishing the discharge by arranging the fixed elastic portion in the course of the narrow pipe connecting the probe and the syringe pump, in particular, near the connection portion between the syringe pump and the narrow pipe, it is possible to provide a chemical analysis apparatus in which the pipetting accuracy is high and sample and reagent are not scattered.

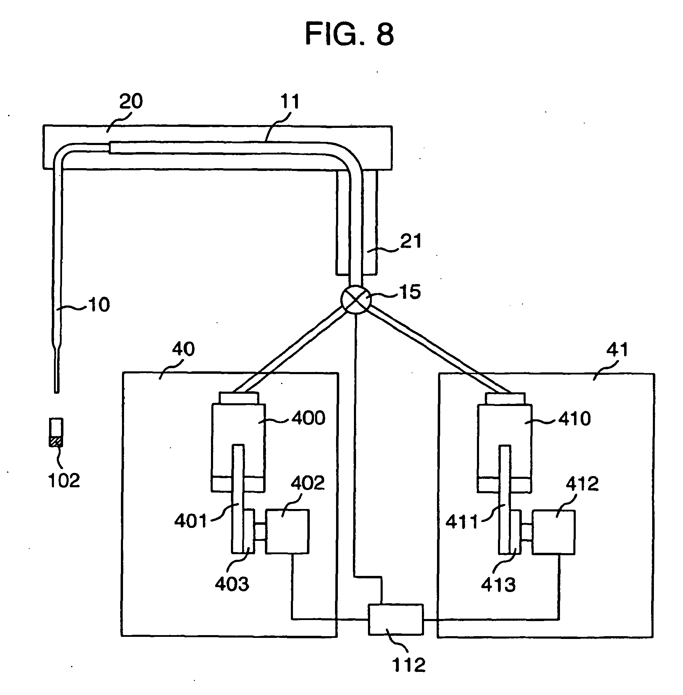

Another embodiment is shown in Fig. 8. Fig. 8 is a schematic view showing an embodiment of the present chemical analysis apparatus. The probe 10 is fixed to the probe arm 20, and is rotated and vertically moved by the arm rotating rod 21. A high resolving power syringe pump portion 40 and a low resolving power syringe pump portion 41 are piped to the tube 11 via a valve 15 controlled by a controller 112. In the high resolving power syringe pump portion 40, a plunger 401 of a syringe pump 400 is moved by a pulse motor 402 via a transmission mechanism 403 such as a belt, a rack and pinion and the like. The pulse motor 402 is controlled by the controller 112. In the low resolving power syringe pump portion 41, a plunger 411 of a syringe pump 410 is moved by a pulse motor 412 via a transmission mechanism 413 such as a belt, a rack and pinion and the like. The pulse motor 412 is controlled by the controller 112. As the syringe pump having a high resolving power listed here, there may be mentioned a pencil-type pump having a small discharge resolving power 0.02 µl/P, and manufactured by Uniflows Co., Ltd, and the like, however, the syringe pump is not limited to this. As the low resolving power syringe pump, a syringe pump having a resolving power of about 0.1 µl/P can be used. The pumps, for example syringe pumps, are piped to the probe 10 via the tube 11. Flow control means such as a flow resistance portion 12 constituted by a narrow diameter pipe may be connected to the connection portion between the tube 11 and the pumps or the valve 15. A system water such as a pure water or the like is filled in the tube.

As mentioned above, the structure in accordance with the present embodiment is provided with the syringe pump portion 40 corresponding to the high resolving power first pump 400, 401 which is communicated with the probe 10 via the tube 11 formed in the probe arm 20, and on the other hand is provided with the syringe pump portion 41 corresponding to the low resolving power second pump 410, 411 via a changing valve 15 corresponding to the branch portion. Further, these pumps are selectively used in correspondence to the discharge flow rate from the probe 10. In particular, for example, the control is executed in such a manner as to discharge solution at a first flow rate from the probe 10 by driving the syringe pump portion 41, and to discharge solution at a second flow rate greater than the first flow rate by driving the syringe pump portion 40.

A description will be given in particular of an embodiment of the operation of the chemical analysis apparatus in accordance with the present embodiment.

The basic operation that the reagent and the sample are sucked and discharged by the probe 10 is the same as that shown in the first embodiment. In the case that a small flow rate is required such as in the case where the pipetting amount is small, the high resolving power syringe pump portion 40 is used. In the case that a large flow rate is required such as in the case where the pipetting amount is large, the low resolving power syringe pump portion 41 is used. These two syringe pumps 400, 401; 410, 411 are switched by the valve 15.

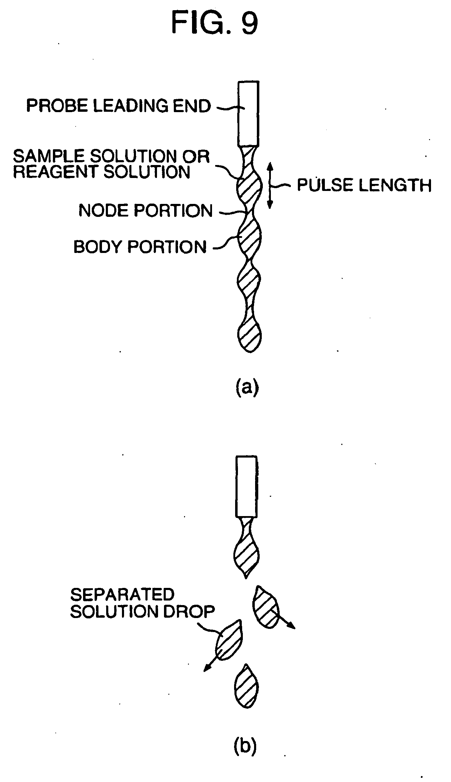

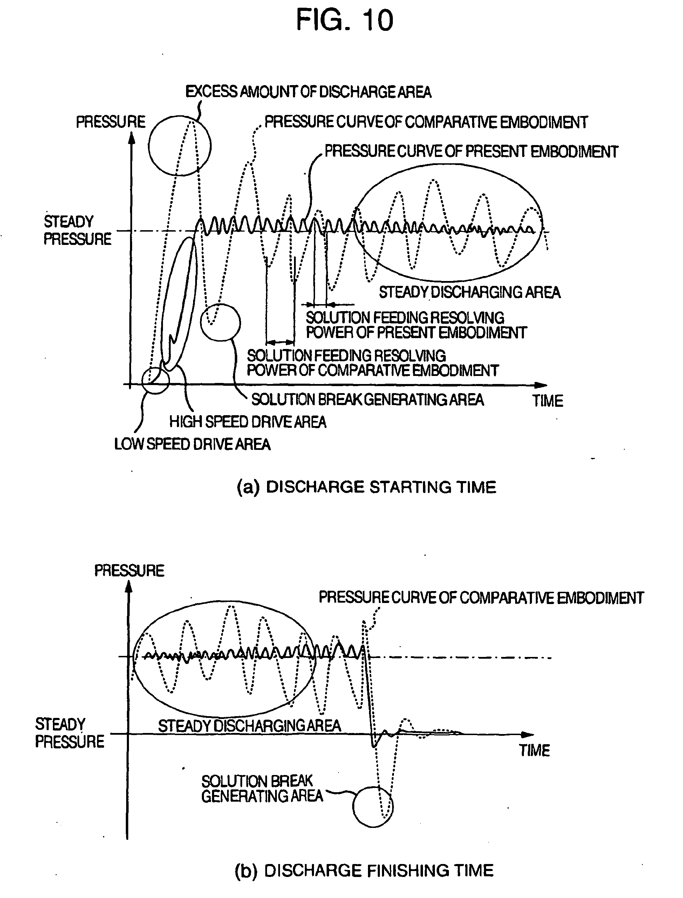

The high resolving power syringe pump portion 40 is driven at a low speed at the time of starting, and is driven at a high speed after a certain time has passed. The transient pressure fluctuation at this time is as shown in Fig. 9. The case that the low resolving power syringe pump portion 41 is used when the flow rate is small is shown as a comparative embodiment by a broken line, and the case that the high resolving power syringe pump portion 40 shown in the present embodiment is used is shown by a solid line. In the case of using the low resolving power syringe pump portion 41, the discharging amount per one pulse is large. Accordingly, even when driving the low resolving power syringe pump at a low speed, a high flow rate is generated, and the solution is discharged at an excess amount with the water hammer phenomenon, and the pressure at this time indicates an overshoot as shown with the broken line in Fig. 10. However, since the discharging amount per one pulse becomes small by using the high resolving power syringe pump, the solution can be actually fed at a low flow rate by driving the high resolving syringe pump at a low speed, and it can be seen from the solid line in Fig. 10 that the overshoot is inhibited. Further, it is possible to inhibit the rapid lowering of the pressure which generates the solution break caused by the "returning phenomenon" from the overshoot.

Further, the inventors of the present application have made a study on countermeasures against the pulsation of the pressure and the flow rate which are generated due to the change in pulse of the discharging pressure, in the steady state during discharging. It was found that in the case that the pulsation is generated, a node portion and a body portion are generated in the sample and the reagent which are discharged from the probe, in the same manner as in the case where the water hammer is generated at the time of starting the discharge, as shown in Fig. 9, the solution break tends to be generated in the boundary portion between the node portion and the body portion in which the curvature changes, and the broken solution is scattered to the periphery, whereby there is the risk that the broken solution contaminates the apparatus. Further, it has been found that in the case that the solution is scattered to other portions than the measurement vessel, the amount of discharged solution is reduced, whereby there is the risk that the pipetting accuracy is lowered.

Alternatively, it is preferable that the control is executed in such a manner that the supply of the solution from the probe 10 is started by the pump having the low discharge resolving power, after starting the discharge of the solution from the probe 10 by the pump having the high discharge resolving power. For example, the pump having the high discharge resolving power is driven for the initial operation of the solution discharge from the probe 10, and thereafter, the operation is switched to the pump having the low discharge resolving power. Alternatively, it is preferable that the solution is discharged by again switching to the pump having the high discharge resolving power at the end of the solution discharge, after the operation by the pump having the low discharge resolving power. In the case that the pump is switched in the steady state in the course of the discharge as in the present embodiment, it is possible to inhibit the large pulsation which is generated due to pumping at low resolving power. Accordingly, the length between the node portion and the body portion formed in the sample or the reagent discharged from the probe, the so-called pulse length, becomes short, and the break between the node portion and the body portion is hard to be distinguished, whereby it is possible to practically suppress the solution break.

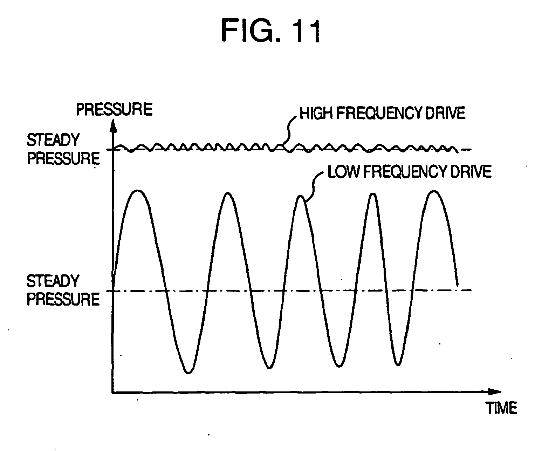

In general, in the high resolving power syringe pump driven by the pulse motor, in the case that the driving frequency of the pulse motor is increased for increasing the flow rate, there is the risk that the motor can not follow the driving frequency and becomes inoperative, whereby the discharge can not be executed. Therefore, the entire efficiency can be improved by changing the valve in the case of the high flow rate at using the low resolving power syringe pump, as in the present embodiment. Fig. 11 shows wave forms of the discharge pressure in the steady state, in the case that the low resolving power pump is driven at the high flow rate, that is, the high frequency, and in the case that the low resolving power pump is driven at the low flow rate, that is, the low frequency. The low resolving power syringe pump is driven at the low frequency by the pulse motor. However, at this time, even when the plunger is moved by one pulse, the flow rate is increased and the pressure is increased, the pulse interval up to the next applied pulse is long, whereby the flow rate is lowered and the pressure is lowered. Therefore, the oscillation of the pressure is increased. However, in the case of employing the high frequency, since the next pulse is applied before the flow rate is sufficiently lowered due to the short pulse interval, the oscillation of the pressure is lowered. Accordingly, the solution break is hard to be generated.

As mentioned above, since the influence of the water hammer at the time of starting the discharge can be made small even when starting the discharge, by feeding the solution by the high resolving power syringe pump in the case of the low flow rate, it is possible to provide a chemical analysis apparatus in which the pipetting accuracy is high, and sample and reagent are not scattered.

Further, since the solution is fed by the high resolving power syringe pump in the case of the low flow rate, and the solution is thereafter fed by the low resolving power syringe pump, it is possible to make the pulsation of the pressure and the flow rate in the steady state in the course of the discharging smaller. Accordingly, it is possible to provide a chemical analysis apparatus in which the pipetting accuracy is high, and sample and reagent are not scattered.

Further, since the influence of the water hammer at the time of finishing the discharge can be made small, by feeding the solution by the high resolving power syringe pump in the case of the low flow rate, it is possible to provide the chemical analysis apparatus in which the pipetting accuracy is high, and sample and reagent are not scattered.

Further, since the influence of the water hammer at the time of finishing the discharge can be made small, by operating the high resolving power syringe pump slowly in the initial operation and the end operation in the case of the low flow rate, it is possible to provide a chemical analysis apparatus in which the pipetting accuracy is high, and sample and reagent are not scattered.

Further, since the low resolving power syringe pump is operated in the case of the large flow rate by switching the valve, and it is possible to make the pulsation of the pressure and the flow rate in the steady state in the course of the discharging smaller at this time, it is possible to provide a chemical analysis apparatus in which the pipetting accuracy is high, and sample and reagent are not scattered.

In accordance with the present invention, it is possible to provide a chemical analysis apparatus which solves or can contribute to solving at least one of the problems in the prior art, can inhibit solution drops from being scattered and provides high pipetting accuracy.

It should be further understood by those skilled in the art that the foregoing description has been made on embodiments of the invention illustrating the present invention in an exemplary manner.

### List of Reference Signs

- 10: probe portion
- 11: tube (pipe)
- 12: flow control means
- 13: volumetric capacity portion (enlarged area portion)
- 14: elastic area portion
- 15: valve
- 20: probe arm
- 21: arm rotating rod

- 30: pump
- 31: plunger
- 32: pulse motor
- 33: transmission mechanism

- 40: syringe pump portion (high resolving power)
- 41: syringe pump portion (low resolving power)

- 101: reaction disc
- 102: reaction vessel
- 103: sample turntable
- 104: sample vessel (sample cup)
- 105: reagent turntable
- 106: reagent bottle
- 107: pipetting mechanism
- 108: pipetting mechanism
- 109: agitating mechanism
- 110: photometric mechanism
- 111: cleaning mechanism
- 112: controller
- 113: console
- 114: constant temperature bath

- 400: pump
- 401: plunger
- 402: pulse motor
- 403: transmission mechanism
- 410: pump
- 411: plunger
- 412: pulse motor
- 413: transmission mechanism

## Claims

1. Chemical analysis apparatus, comprising
- a reagent vessel (106) provided with a reagent solution,
- a sample vessel (104) provided with a sample solution,
- a reaction vessel (102) to which the reagent and the sample solutions are supplied,
- a reagent supplying mechanism (108) for supplying the reagent solution to the reaction vessel (102), and
- a sample supplying mechanism (107) for supplying the sample solution to the reaction vessel (102),
- wherein at least one of the reagent supplying mechanism (108) and the sample supplying mechanism (107) comprises:
- a probe portion (10) for sucking and discharging the solution,
- a probe arm portion (20) communicated with the probe portion (10) and moving the probe portion (10) to the reagent vessel (106) or the sample vessel (104) and to the reaction vessel (102),
and
- a pump (30; 400) connected to the probe portion (10) via a pipe (11) provided in the probe arm portion (20) ,
**characterized in that**
flow control means (12; 13; 14; 15, 410) which reduce pressure pulsations are provided in the pipe (11) positioned between the probe arm portion (20) and the pump (30; 400).

2. Chemical analysis apparatus according to claim 1, **characterized in that** the flow control means are a narrow area portion (12) having a smaller cross-sectional area than the pipe (11) in the probe arm portion (20).

3. Chemical analysis apparatus according to claim 1 or 2, **characterized in that** the flow control means are a flow resistance portion (12) having a higher flow path resistance than the pipe (11) in the probe arm portion (20).

4. Chemical analysis apparatus according to claim 1, **characterized in that** the flow control means are an enlarged area portion (13)
having a larger cross-sectional area than the pipe (11) in the probe arm portion (20).

5. Chemical analysis apparatus according to a claim 1, **characterized**
**in that** the flow control means are an elastic area portion (14) structured with a material having a lower elastic modulus in tension than the probe portion (10) and has a rigidity of the elastic modulus in tension of 981 N/cm² to 29.4 kN/cm² (100 to 3000 kgf/cm²).

6. Chemical analysis apparatus according to claim 2, **characterized in that** a portion having a large cross-sectional area in the narrow area portion (12) is provided closer to the pump (30) than to the narrow area portion (12).

7. Chemical analysis apparatus according to any of claims 1 to 3,
**characterized in that**
- the flow control means are a two-way valve (15) provided in the pipe (11) between the probe arm portion (20) and the first pump (400) and a second pump (410) connected to the branch portion of the two-way valve (1.5), and
- the second pump (410) has a lower discharge resolving power than the first pump (400) and is adapted to be controlled in such a manner that the flow rate thereof is greater than the flow rate of the first pump (400).

8. Chemical analysis apparatus according to claim 7, being adapted to be controlled in such a manner as to start supplying the solution from the probe portion (10) by the first pump (400) after starting supplying the solution from the probe portion (10) by the second pump (410).

9. Chemical analysis apparatus according to any of claims 1 to 8, further comprising a controller (112) for controlling the operation of the apparatus, particularly the operation of the pump (30) or the operation of the pumps (400, 401), respectively.

## Patentansprüche

1. Vorrichtung zur chemischen Analyse, die aufweist:
- einen Reagensbehälter (106) mit einer Reagenslösung,
- einen Probenbehälter (104) mit einer Probenlösung,
- einen Reaktionsbehälter (102), in den die Reagenslösung und die Probenlösung eingebracht werden,
- einen Mechanismus (108) zur Reagenslieferung, der die Reagenslösung zum Reaktionsbehälter (102) liefert,
und
- einen Mechanismus (107) zur Probenlieferung, der die Probenlösung zum Reaktionsbehälter (102) liefert,
- wobei der Mechanismus (108) zur Reagenslieferung und/oder der Mechanismus (107) zur Probenlieferung umfasst:
- einen Sondenbereich (10) zum Ansaugen und zur Abgabe der Lösung,
- einen Sondenarmbereich (20), der mit dem Sondenbereich (10) in Verbindung steht und den Sondenbereich (10) zum Reagensbehälter (106) oder zum Probenbehälter (104) und zum Reaktionsbehälter (102) bewegt,
und
- eine Pumpe (30; 400), die über ein Rohr (11), das im Sondenarmbereich (20) vorgesehen ist, mit dem Sondenbereich (10) verbunden ist,
**dadurch gekennzeichnet, dass**
im Rohr (11) zwischen dem Sondenarmbereich (20) und der Pumpe (30; 400) eine Einrichtung zur Durchsatzkontrolle (12; 13; 14; 15, 410) vorgesehen ist, die Druckpulsationen verringert.

2. Vorrichtung zur chemischen Analyse nach Anspruch 1, **dadurch gekennzeichnet, dass** die Einrichtung zur Durchsatzkontrolle ein Bereich (12) mit kleiner Querschnittsfläche ist, dessen Querschnittsfläche kleiner ist als die des Rohrs (11) im Sondenarmbereich (20).

3. Vorrichtung zur chemischen Analyse nach Anspruch 1 oder 2, **dadurch gekennzeichnet, dass** die Einrichtung zur Durchsatzkontrolle ein Bereich (12) mit Strömungswiderstand ist, der einen höheren Strömungswiderstand des Strömungswegs aufweist als das Rohr (11) im Sondenarmbereich (20).

4. Vorrichtung zur chemischen Analyse nach Anspruch 1, **dadurch gekennzeichnet, dass** die Einrichtung zur Durchsatzkontrolle ein Bereich (13) mit vergrößertem Querschnitt ist, dessen Querschnittsfläche größer ist als die des Rohrs (11) im Sondenarmbereich (20).

5. Vorrichtung zur chemischen Analyse nach Anspruch 1, **dadurch gekennzeichnet, dass** die Einrichtung zur Durchsatzkontrolle ein Bereich (14) mit elastisch veränderlicher Querschnittsfläche ist, der aus einem Material aufgebaut ist, das einen kleineren auf Zug bezogenen Elastizitätsmodul aufweist als der Sondenbereich (10) und eine Steifigkeit des auf Zug bezogenen Elastizitätsmoduls von 981 N/cm² bis 29,4 kN/cm² (100 bis 3000 kgf/cm²) besitzt.

6. Vorrichtung zur chemischen Analyse nach Anspruch 2, **dadurch gekennzeichnet, dass** ein Bereich mit einer großen Querschnittsfläche in dem Bereich (12) mit kleiner Querschnittsfläche vorgesehen ist, der näher zur Pumpe (30) als zu dem Bereich mit kleiner Querschnittsfläche liegt.

7. Vorrichtung zur chemischen Analyse nach einem oder mehreren der Ansprüche 1 bis 3, **dadurch gekennzeichnet, dass**
- die Einrichtung zur Durchsatzkontrolle ein Zweiwegeventil (15) ist, das im Rohr (11) zwischen dem Sondenarmbereich (20) und der ersten Pumpe (400) und einer zweiten Pumpe (410) vorgesehen ist, die mit dem Abzweigbereich des Zweiwegeventils (15) verbunden sind,
und
- die zweite Pumpe (410) ein kleineres Durchsatz-Auflösungsvermögen als die erste Pumpe (400) aufweist und so gesteuert werden kann, dass ihr Durchsatz größer ist als der Durchsatz der ersten Pumpe (400).

8. Vorrichtung zur chemischen Analyse nach Anspruch 7, die so gesteuert werden kann, dass die Lieferung der Lösung vom Sondenbereich (10) durch die erste Pumpe (400) erst beginnt, nachdem die Lieferung der Lösung vom Sondenbereich (10) durch die zweite Pumpe (410) begonnen hat.

9. Vorrichtung zur chemischen Analyse nach einem oder mehreren der Ansprüche 1 bis 8, die ferner eine Steuereinrichtung (112) zur Steuerung des Betriebs der Vorrichtung aufweist, insbesondere zur Steuerung des Betriebs der Pumpe (30) bzw. des Betriebs der Pumpen (400, 401).

## Revendications

1. Appareil d'analyse chimique, comprenant :
- un récipient de réactif (106) pourvu d'une solution de réactif,
- un récipient d'échantillon (104) pourvu d'une solution d'échantillon,
- un récipient à réaction (102) auquel les solutions de réactif et d'échantillon sont fournies,
- un mécanisme de fourniture de réactif (108) permettant de fournir la solution de réactif au récipient à réaction (102),
et
- un mécanisme de fourniture d'échantillon (107) permettant de fournir la solution d'échantillon au récipient à réaction (102),
- dans lequel au moins l'un des mécanismes parmi le mécanisme de fourniture de réactif (108) et le mécanisme de fourniture d'échantillon (107) comprend :
- une sonde (10) permettant d'aspirer et de refouler la solution,
- un bras de sonde (20) communiquant avec la sonde (la) et déplaçant la sonde (10) vers le récipient de réactif (106) ou le récipient d'échantillon (104) et vers le récipient à réaction (102),
et
- une pompe (30 ; 400) reliée à la sonde (10) via un tuyau (11) disposé dans de bras de sonde (20),
**caractérisé en ce que**
des moyens de régulation du débit (12 ; 13 ; 14 ; 15 ; 410) qui réduisent les pulsations de pression sont disposés dans le tuyau (11) positionné entre le bras de sonde (20) et la pompe (30 ; 400).

2. Appareil d'analyse chimique selon la revendication 1, **caractérisé en ce que** les moyens de régulation du débit constituent une zone étroite (12) ayant une section transversale plus petite que le tuyau (11) dans le bras de sonde (20).

3. Appareil d'analyse chimique selon la revendication 1 ou 2, **caractérisé en ce que** les moyens de régulation du débit constituent une partie de résistance à l'écoulement (12) ayant une résistance à l'écoulement plus grande que le tuyau (11) dans le bras de sonde.

4. Appareil d'analyse chimique selon la revendication 1, **caractérisé en ce que** les moyens de régulation du débit constituent une zone élargie (13) ayant une section transversale plus grande que le tuyau (11) dans le bras de sonde (20).

5. Appareil d'analyse chimique selon la revendication 1, **caractérisé en ce que** les moyens de régulation du débit constituent une zone élastique (14) constituée d'un matériau ayant un module d'élasticité en tension inférieur à la sonde (10) et présente une rigidité du module d'élasticité en tension de 981 N/cm² à 29.4 kN/cm² (100 à 3000 kgf/cm²).

6. Appareil d'analyse chimique selon la revendication 2, **caractérisé en ce qu'**une partie ayant une grande section transversale dans la zone étroite (12) est disposée plus près de la pompe (30) que de la zone étroite (12).

7. Appareil d'analyse chimique selon l'une quelconque des revendications 1 à 3, **caractérisé en ce que**
- les moyens de régulation du débit constituent un clapet à deux voies (15) disposé dans le tuyau (11) entre le bras de sonde (20) et la première pompe (400) et une seconde pompe (410) reliée à l'embranchement du clapet à deux voies (15),
et
- la seconde pompe (410) a un pouvoir de résolution du refoulement inférieur à la première pompe (400) et peut être commandée de manière à ce que le débit de celle-ci soit supérieur au débit de la première pompe (400).

8. Appareil d'analyse chimique selon la revendication 7, pouvant être commandé de manière à commencer à fournir la solution provenant de la sonde (10) au moyen de la première pompe (400) après avoir commencé à fournir la solution provenant de la sonde (10) au moyen de la seconde pompe (410).

9. Appareil d'analyse chimique selon l'une quelconque des revendications 1 à 8, comprenant en outre un dispositif de commande (112) permettant de commander le fonctionnement de l'appareil, notamment le fonctionnement de la pompe (30) ou le fonctionnement des pompes (400, 401), respectivement.
